(19) Europäisches Patentamt
European Patent Office
Office européen des brevets

(11) Numéro de publication: **0 347 347 A1**

(12) # DEMANDE DE BREVET EUROPEEN

(21) Numéro de dépôt: **89420212.6**

(22) Date de dépôt: **13.06.89**

(51) Int. Cl.4: **C 08 G 69/26**
C 08 L 77/06, C 08 J 5/00

(30) Priorité: **15.06.88 FR 8808260**

(43) Date de publication de la demande: **20.12.89 Bulletin 89/51**

(84) Etats contractants désignés: **AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Barthelemy, Pascal**
**21, rue de la Part-Dieu**
**69003 Lyon (FR)**

(74) Mandataire: **Troiliet, Maurice et al**
**RHONE-POULENC CHIMIE Service Brevets Chimie**
**Centre de Recherches des Carrières B.P. 62**
**F-69192 Saint-Fons Cédex (FR)**

Revendication pour l'Etat contractant suivant: ES

(54) **Polyamides amorphes transparents ayant une température de transition vitreuse élevée.**

(57) La présente invention concerne des copolyamides amorphes et transparents présentant notamment une température de transition vitreuse Tg supérieure à 142°C et donc une excellente stabilité du polymère aux températures élevées.

Ils présentent une structure comprenant les unités de récurrence (I), (II), éventuellement (II') et (III) : (I) désignant :

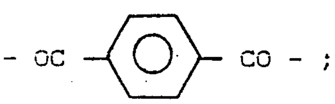

(II) désignant :

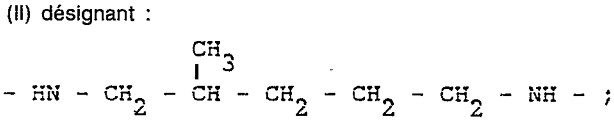

(II') désignant :

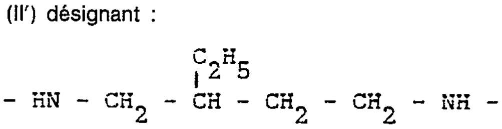

et (III) désignant :

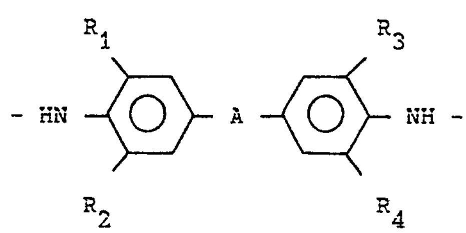

avec $R_1$, $R_2$, $R_3$ et $R_4$ représentant des groupes alkyles ayant de 1 à 3 atomes de carbone et A représentant

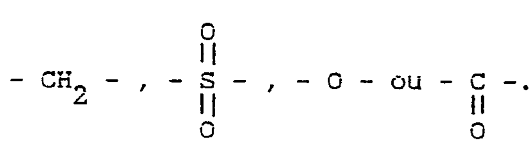

Ces copolyamides permettent d'obtenir des objets moulés, fils ou films pour lesquels on note une excellente conservation des propriétés mécaniques en fonction de la température.

EP 0 347 347 A1

## Description

# POLYAMIDES AMORPHES TRANSPARENTS AYANT UNE TEMPERATURE DE TRANSITION VITREUSE ELEVEE

La présente invention concerne des polyamides amorphes transparents dérivant d'acide téréphtalique, de méthyl-2 pentaméthylènediamine et d'une diamine aromatique encombrée.

On connaît déjà depuis longtemps des polyamides dérivant de diamines aliphatiques et de diacides carboxyliques aromatiques. De nombreux polyamides sont cristallisés (on parle alors de polymères semi-cristallins) et on ne peut pas utiliser les produits cristallisés dans tous les domaines, en particulier dans ceux qui exigent une transparence ; des exemples de polyamides cristallisés sont notamment les produits obtenus à partir d'acide téréphtalique et d'hexaméthylènediamine ou ceux obtenus à partir d'acide téréphtalique et de méthyl-2 pentaméthylènediamine (cf. JA-A-69/019.551). D'autres polyamides sont amorphes. Ils se ramollissent à une température relativement basse et présentent une basse température de transition vitreuse (Tg) ; des polyamides amorphes typiques sont par exemple ceux obtenus à partir d'acide téréphtalique, d'acide isophtalique (70 à 85 % en mole dans le mélange des diacides) et d'hexaméthylènediamine (cf. US-A-3.382.216) qui présentent une Tg comprise entre 100° et 120° C.

Les polyamides amorphes se prêtent bien à la fabrication de feuilles, de rubans, de plaques, de tubes, de revêtements de câbles et d'objets moulés par injection. Toutefois, à cause de leur faible Tg, ces polyamides ne peuvent être utilisés qu'à des températures basses ce qui réduit fortement leurs possibilités d'application. Des polyamides de Tg supérieure sont décrits dans le brevet français FR-A-2.325.673 ; ils sont obtenus à partir d'acide téréphtalique, d'acide isophtalique (15 à 30 % en mole dans le mélange des diacides) et de méthyl-2 pentaméthylènediamine-1,5, mais la Tg la plus élevée qui est accessible avec ces polyamides plafonne à 142° C.

La Tg étant un élément important qui va déterminer la stabilité thermomécanique des polymères amorphes, il reste souhaitable de pouvoir disposer de polyamides amorphes ayant une Tg supérieure à 142° C. Poursuivant des travaux dans cette direction, la Demanderesse a maintenant trouvé, et c'est ce qui constitue l'objet de la présente invention, qu'en utilisant dans des proportions déterminées de l'acide téréphtalique, de la méthyl-2 pentaméthylènediamine-1,5 et une diamine aromatique encombrée particulière, on obtient des copolyamides amorphes qui présentent une Tg supérieure à 142° C et, plus particulièrement, comprise entre 145° C et 170° C.

Plus précisément, la présente invention concerne des copolyamides amorphes et transparents réalisés à partir de réactifs comprenant de l'acide téréphtalique ou un dérivé et de la méthyl-2 pentaméthylènediamine, ces copolyamides étant caractérisés par les points suivants :

. ils contiennent dans leur structure les unités de récurrence de formules (I), (II), éventuellement (II'), et (III) :

(I) désignant la structure :

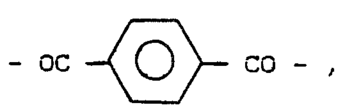

(II) désignant la structure :

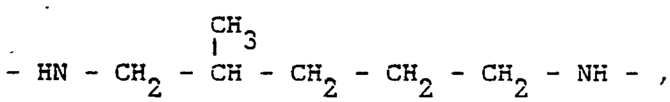

(II') désignant la structure :

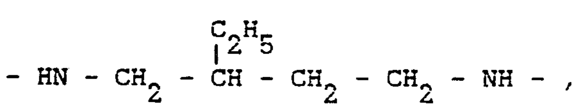

(III) désignant la structure :

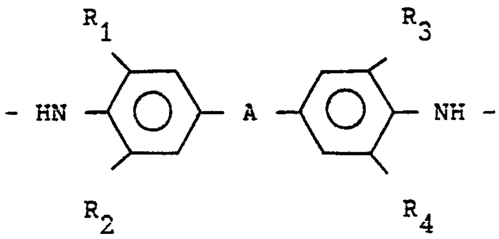

dans laquelle :

- les symboles $R_1$, $R_2$, $R_3$ et $R_4$, identiques ou différents, représentent chacun un radical méthyle, éthyle, propyle ou isopropyle, et obéissent aux conditions suivantes : soit $R_1 = R_2 = R_3 = R_4$, soit $R_1 = R_2$ avec $R_3 = R_4$, soit $R_1 = R_3$ avec $R_2 = R_4$ ou soit $R_1 = R_4$ avec $R_2 = R_3$,
- le symbole A représente un groupement :

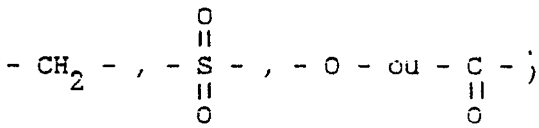

. le rapport molaire des unités (I) par rapport à la somme des unités (II) + (II′) + (III) est égal à 1 ;
. la quantité des unités (II′) dans le mélange (II) + (II′) se situe dans l'intervalle allant de 0 a 5 % en mole et celle des unités (II), par rapport à la même référence, se situe dans l'intervalle allant de 100 à 95 % en mole ;
. la quantité des unités (III) dans le mélange (II) + (II′) + (III) obéit aux conditions complémentaires suivantes :
- elle se situe dans l'intervalle allant de 6 à 50 % en mole lorsque les quatre symboles $R_1$, $R_2$, $R_3$ et $R_4$ représentent chacun un radical ayant plus d'un atome de carbone,
- elle se situe dans l'intervalle allant de 13 à 50 % en mole lorsque seulement deux des quatre symboles $R_1$, $R_2$, $R_3$ et $R_4$ représentent chacun un radical ayant plus d'un atome de carbone (les deux autres symboles représentant alors chacun un radical méthyle), ou
- elle se situe dans l'intervalle allant de 18 à 50 % en mole lorsque les quatre symboles $R_1$, $R_2$, $R_3$ et $R_4$ représentent chacun un radical méthyle.

Lorsque la quantité des unités (III) est inférieure à l'une ou l'autre des bornes minimales indiquées ci-avant, les copolyamides obtenus sont semi-cristallins.

Les unités de formule (I) proviennent d'acide téréphtalique ou d'un dérivé comme par exemple un dihalogénure ou un diester.

Les unités de formule (II) sont issues de méthyl-2 pentaméthylènediamine-1,5. Quand aux unités éventuelles de formule (II′), elles dérivent d'éthyl-2 tétraméthylènediamine-1,4. On peut effectuer la synthèse de la méthyl-2 pentaméthylènediamine utilisée par hydrogénation du dinitrile de l'acide méthyl-2 glutarique selon des procédés connus. De même, la synthèse de l'éthyl-2 tétraméthylènediamine peut être effectuée par hydrogénation du dinitrile de l'acide éthyl-2 succinique.

S'agissant des unités de formule (III), elles proviennent des diamines de formule générale :

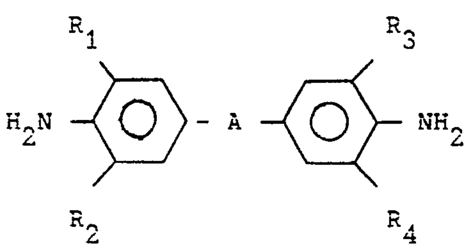

(IV)

dans laquelle les symboles $R_1$, $R_2$, $R_3$, $R_4$ et A présentent les significations données ci-avant à propos des unités de formule (III).

Selon une modalité préférentielle, les copolyamides de la présente invention présentent une structure telle que définie ci-avant dans laquelle :

. les unités (III) possèdent la structure précédemment mentionnée avec $A = -CH_2-$, et
. la quantité des unités (III) dans le mélange (II) + (II′) + (III) obéit aux conditions complémentaires suivantes :
- elle se situe dans l'intervalle allant de 10 à 40 % en mole lorsque les quatre symboles $R_1$, $R_2$, $R_3$ et $R_4$ représentent chacun un radical ayant plus d'un atome de carbone,
- elle se situe dans l'intervalle allant de 15 à 40 % en mole lorsque seulement deux des quatre symboles $R_1$, $R_2$, $R_3$ et $R_4$ représentent chacun un radical ayant plus d'un atome de carbone, ou
- elle se situe dans l'intervalle allant de 20 à 40 % en mole lorsque les quatre symboles $R_1$, $R_2$, $R_3$ et $R_4$ représentent chacun un radical méthyle.

A titre d'exemples spécifiques de diamines encombrées de formule (IV) qui conduisent aux unités de formule (III), dans laquelle $A = -CH_2-$, on peut citer en particulier :

- le diamino-4,4′ tétraméthyl-3,3′,5,5′ diphénylméthane,
- le diamino-4,4′ tétraéthyl-3,3′,5,5′ diphénylméthane,
- le diamino-4,4′ diméthyl-3,5 diéthyl-3′,5′ diphénylméthane,
- le diamino-4,4′ diéthyl-3,3′ diméthyl-5,5′ diphénylméthane,
- le diamino-4,4′ tétraisopropyl-3,3′,5,5′ diphénylméthane,
- le diamino-4,4′ diisopropyl-3,3′ diméthyl-5,5′ diphénylméthane.

Ces diamines encombrées peuvent être préparées selon les procédés décrits dans le brevet anglais GB-A-852.651 et le brevet américain US-A-3.481.900.

Parmi les copolyamides appartenant au groupe préféré défini ci-avant, ceux qui conviennent tout particulièrement bien sont les polymères présentant une structure dans laquelle les unités de formule (III) proviennent des diamines encombrées suivantes : le diamino-4,4′ diéthyl-3,3′ diméthyl-5,5′ diphénylméthane, le diamino-4,4′ tétraéthyl-3,3′,5,5′ diphénylméthane et le diamino-4,4′ tétraisopropyl-3,3′,5,5′ diphénylméthane.

On prépare facilement les copolyamides comportant les unités de récurrence de formules (I), (II), éventuellement (II′), et (III) par des procédés de polycondensation bien connus des experts dans le domaine des polymères.

Par exemple un mode opératoire commode consiste dans le procédé de polycondensation en masse fondue. On introduit les diamines et le diacide carboxylique, le cas échéant, en ajoutant de l'eau, dans un autoclave en acier inoxydable. Il est quelquefois avantageux de préparer les sels des diamines et du diacide carboxylique auparavant. On chauffe les réactifs à une température allant de 200 à 250° C environ, tout en agitant. On évacue la vapeur d'eau et on augmente la température à environ 260 à 300° C. A cette température, on agite le mélange réactionnel quelque temps dans le courant d'azote. Enfin on fait le vide dans l'autoclave et on continue à condenser jusqu'au moment où le polyamide a atteint le poids moléculaire désiré. On peut également faire réagir un ester alkylique inférieur, comme par exemple un ester méthylique, du diacide carboxylique avec le mélange des diamines. Ce procédé peut consister à enchaîner dans un même réacteur les deux étapes suivantes : la première étape est une prépolymérisation à pression atmosphérique à une température de l'ordre de 90 à 130° C avec élimination de l'alcool formé ; dans la deuxième étape on monte la température vers 250 à 300° C avec distillation de l'alcool pour achever la polycondensation.

Un autre procédé commode est la technique de polycondensation en solution selon laquelle on fait réagir l'halogénure du diacide carboxylique, comme par exemple le chlorure du diacide (chlorure de téréphtaloyle), avec le mélange des diamines en opérant dans un solvant exempt de traces d'eau. Les solvants couramment utilisés sont des bons solvants ou des agents gonflants des polymères à synthétiser. Ils sont en général de nature apotique polaire. Il est également nécessaire pour une plus grande efficacité de la polycondensation de dissoudre dans le milieu réactionnel une base organique susceptible de réagir avec l'hydracide dégagé lors de la réaction d'acylation ; cette base est très souvent une amine tertiaire, comme par exemple la triéthylamine, la diisopropylbutylamine ou la pyridine. On a coutume de maintenir au cours de la polycondensation une température de la masse réactionnelle constante et relativement basse telle que celle comprise entre 0° C et 10° C. Une fois l'addition des réactifs terminée, on revient à température ambiante. Le polymère peut alors être isolé par précipitation dans un non solvant.

Un autre procédé commode encore pour fabriquer les copolyamides selon l'invention consiste à réaliser une polycondensation interfaciale. Celle-ci s'effectue à l'interface entre une phase aqueuse contenant les amines et un solvant organique non miscible à l'eau contenant l'halogénure du diacide carboxylique (par exemple : dichlorométhane, tetrachloroéthylène). On a coutume de dissoudre une base inorganique dans la phase aqueuse, permettant de capter l'hydracide dégagé lors de la réaction d'acylation. Les températures de réaction sont en général maintenues entre 0° C et 10° C, ceci afin de limiter la formation des oligomères de bas poids moléculaire.

Dans l'un ou l'autre des procédés précités, les réactifs sont utilisés dans des proportions telles que :

. le rapport molaire acide téréphtalique ou son dérivé/diamine est égal à 1,

. la quantité d'éthyle-2 tétraméthylènediamine-1,4 dans le mélange éthyl-2 tétraméthylènediamine-1,4 + méthyl-2 pentaméthylènediamine-1,5 se situe dans l'intervalle allant de 0 à 5 % en mole,

. la quantité de diamine aromatique encombrée de formule (IV) dans le mélange des diamines obéit aux conditions suivantes :

- elle se situe dans l'intervalle allant de 8 à 50 % en mole, et de préférence allant de 10 à 40 % en mole, lorsque les quatre symboles $R_1$, $R_2$, $R_3$ et $R_4$ représentent chacun un radical ayant plus d'un atome de carbone,
- elle se situe dans l'intervalle allant de 13 à 50 % en mole, et de préférence allant de 15 à 40 % en mole, lorsque seulement deux des quatre symboles, $R_1$, $R_2$, $R_3$ et $R_4$ représentent chacun un radical ayant plus d'un atome de carbone (les deux autres symboles représentant alors chacun un radical méthyle), ou
- elle se situe dans l'intervalle allant de 18 à 50 % en mole, et de préférence allant de 20 à 40 % en mole lorsque les quatre symboles $R_1$, $R_2$, $R_3$ et $R_4$ représentent chacun un radical méthyle.

Par rapport aux polyamides amorphes et transparents conformes aux indications du brevet français FR-A-2.325.673, les copolyamides selon la présente invention se signalent notamment par une température de transition vitreuse Tg plus élevée qui se situe entre 145° et 170° C et, donc, par une meilleure stabilité du polymère et une meilleure conservation des propriétés mécaniques aux températures élevées. En remplaçant les unités de formule (III) par des unités dérivant d'une autre diamine encombrée que celles répondant à la formule (IV) mentionnée ci-avant, par exemple l'isophoronediamine de formule :

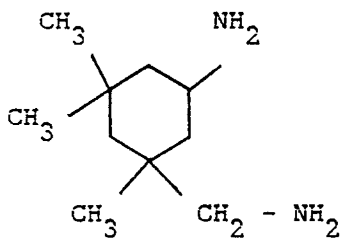

on a constaté, pour les mêmes quantités d'unités (III), que les copolyamides obtenus à partir de cette diamine de remplacement sont semi-cristallins et possèdent une basse Tg bien inférieure à 150° C ; ce résultat est de nature à rendre tout à fait surprenant la possibilité d'obtenir des copolyamides amorphes et de haute Tg en appliquant l'invention de la Demanderesse.

Les copolyamides selon l'invention sont des polymères statistiques. Ils possèdent une structure amorphe globale ; cela permet de retrouver les avantages liés d'une part à la facilité de mise en oeuvre à l'état fondu en raison de l'absence de cristallinité et d'autre part à la bonne transparence de ces polymères. Ces copolyamides peuvent servir de poudre à mouler et être transformés à l'aide des machines conventionnelles d'injection, d'extrusion ou de filage pour donner des objets conformés tels que des pièces, des corps creux, des films, des pellicules ou des fils.

On peut ajouter dans les copolyamides de l'invention, avant, pendant ou vers la fin de la polycondensation, les additifs habituels lors de la préparation de polyamides, qui doivent être avantageusement solubles dans le copolyamide quand la transparence joue un rôle important.

Ces additifs sont par exemple des anti-oxydants, des agents ignifugeants, des stabilisants à la lumière, des stabilisants thermiques, des modificateurs de choc, des plastifiants, des agents de démoulage, des azurants optiques, des colorants, etc.

Dans le cas où la transparence des copolyamides conformes à l'invention joue un rôle moins important, les additifs mentionnés peuvent aussi être moins solubles dans le copolyamide, et l'on peut également utiliser des charges de renforcement, tels que des fibres organiques ou minérales, des pigments, des poudres minérales, etc.

Ces additifs peuvent être mélangés aux copolyamides ou encore y être incorporés par une nouvelle fusion dans des dispositifs appropriés, par exemple dans une extrudeuse.

Les copolyamides conformes à l'invention peuvent également être alliés ou mélangés avec d'autres homo- ou copolyamides ou mélanges de ceux-ci ou avec d'autres matières plastiques, ce qui peut s'effectuer par exemple en mélangeant les granulés ou les matières plastiques constitutives et en effectuant une coextrusion.

Comme homopolyamide supplémentaire, on peut par exemple envisager le nylon 12 (polymère d'acide ω-amino dodécanoïque), le nylon 11 (polymère d'acide ω-amino undécanoïque), le nylon 6.9 (polymère d'hexaméthylènediamine et d'acide azélaïque), le nylon 6.10 (polymère d'hexaméthylènediamine et d'acide sébacique), le nylon 6 (polymère d'ε-caprolactame) ou le nylon 6.6 (polymère d'hexaméthylènediamine et d'acide adipique), et comme copolyamide, par exemple ceux qui contiennent les monomères conduisant aux homopolyamides indiqués ci-avant ou d'autres copolyamides.

Les exemples non limitatifs qui suivent montrent comment la présente invention peut être mise en oeuvre pratiquement.

EXEMPLE 1 ET ESSAIS COMPARATIFS A ET B

Copolyamide de l'invention obtenu à partir du chlorure de téréphtaloyle, de méthyl-2 pentaméthylènediamine-1,5 et de diamino-4,4′ tétraéthyl-3,3′,5,5′ diphénylméthane [la quantité des unités (III) dans le mélange des diamines est de 10 % en mole].

1. Synthèse du copolyamide :

Dans un réacteur tricol en verre pyrex (marque déposée) de 1 litre, muni d'un agitateur central à encre et d'une ampoule de coulée, on introduit à température ambiante (20° C) sous une atmosphère d'azote sec :
- 42,42 g (0,3657 mole) de méthyl-2 pentaméthylènediamine,
- 83,67 g de triéthylamine,
- 12,58 g (0,0406 mole) de diamino-4,4′ tétraéthyl-3,3′,5,5′ diphénylméthane, et
- 116 g de diméthyl-1,3 imidazolidone-2 préalablement séchée pendant 5 heures sur un tamis moléculaire de 4 Å disponible dans le commerce sous la marque déposée PROLABO.

Dans l'ampoule de coulée on introduit sous atmosphère d'azote sec une solution de 62,47 g (0,4063 mole) de chlorure de téréphtaloyle (recristallisé dans la cyclohexanone) dans 450 g de diméthyl-1,3 imidazolidone-2 préalablement séchée comme indiqué ci-avant.

Le réacteur est alors refroidi à l'aide d'eau glacée de manière à amener la température de la masse réactionnelle à une température de l'ordre de 8° C. On introduit ensuite, sous atmosphère d'azote sec, sous agitation rapide et goutte à goutte, le contenu de l'ampoule de coulée dans le réacteur sur une période de 4 heures, la température de la masse réactionnelle étant maintenue vers 8° C. En fin d'addition du chlorure de téréphtaloyle, on obtient une solution renfermant environ 15 % en poids de polymère. On laisse revenir à la température ambiante, puis on continue à agiter la masse réactionnelle à cette température pendant 10

heures.

Le copolyamide obtenu est précipité en versant la masse réactionnelle dans 5 litres d'eau. On filtre et on lave ensuite 4 fois de suite le polymère avec chaque fois 4 litres d'eau, jusqu'à ce que l'eau de lavage, en définitive, ne contienne plus d'ions chlorures (détectés à l'aide de $AgNO_3$). On essore le polymère sous vide, puis on le sèche dans une étuve à 80°C sous un vide correspondant à $1,33.10^2$ Pa jusqu'à l'obtention d'un poids constant de 105 g. Le rendement de cette synthèse est de 97,2 % (ce rendement est exprimé en poids par rapport au poids théorique du polymère attendu).

2. Caractérisation du copolyamide :

Le copolyamide obtenu est amorphe (il présente une Tg, mais pas de température de fusion) et transparent, et il possède une viscosité inhérente de 1,07 dl/g. Cette viscosité est mesurée à 25°C sur une solution renfermant 5 g de polymère dans 1 litre de métacrésol.

Sa masse moléculaire moyenne en poids ($\overline{M}w$), déterminée par chromatographie de perméation de gel avec étalonnage à l'aide de polystyrène, est de 94110 g.

La température de transition vitreuse Tg, déterminée par analyse thermique différentielle (ATD) avec une vitesse de montée en température de 10°C/min opérée sous atmosphère d'azote, est de 158°C.

la viscosité à l'état fondu du polymère, déterminée à 280°C sous un gradient de cisaillement de 10 $s^{-1}$ à l'aide d'un rhéomètre GOTTFERT (marque déposée), est de 4500 Pa.s.

L'analyse par RMN du proton (solvant : $CF_3$ COOD ; référence interne : tetraméthylsilane) est en accord avec la structure de polymère statistique présentant les séquences suivantes :

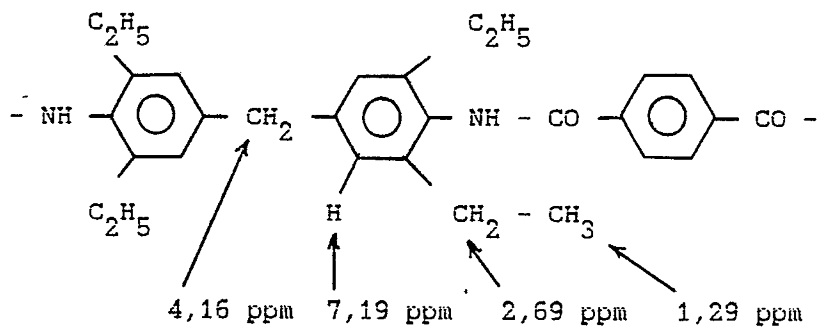


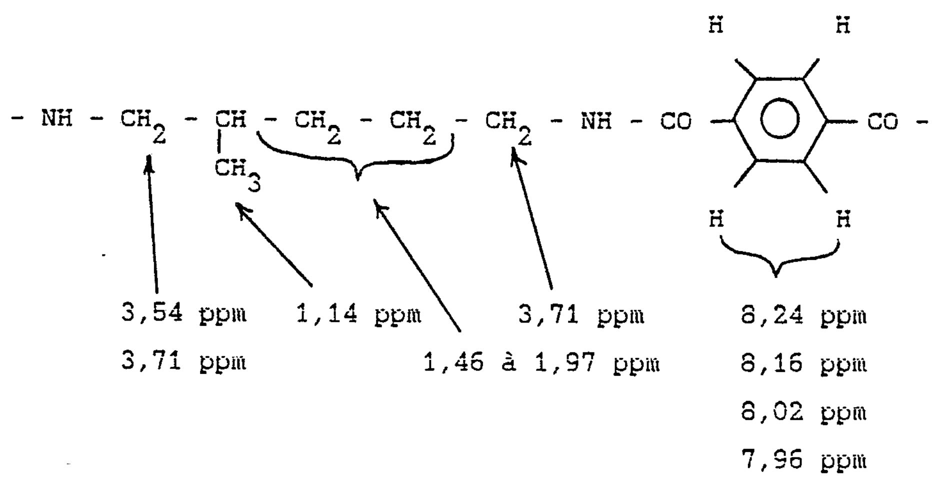


Le polymère obtenu est séché une nouvelle fois dans une étuve à 100°C pendant 15 heures sous un vide correspondant à $1,33.10^2$ Pa, puis on prépare des éprouvettes moulées de dimensions 80 x 10 x 4 mm permettant de mesurer les valeurs du module de torsion en fonction de la température. Ces éprouvettes sont préparées à l'aide d'une presse à vis connue dans le commerce sous la marque KAP ; pour ce faire, le polymère séché comme indiqué ci-avant est moulé par injection dans les conditions suivantes : température du fondoir = 280°C ; température du moule = 110°C ; pression matière d'injection = $7.10^5$ Pa ; durée du cycle = 1 min. Le module en torsion est déterminé à différentes températures au pendule automatique de torsion sous une fréquence de l'ordre de 1 Hertz selon la norme ISO R 527 méthode B, les éprouvettes étant conditionnés à 0 % d'humidité relative (les éprouvettes sont placées en dessicateur sur silicagel et séchées 24 heures à 20°C sous une pression réduite de $1,33.10^2$ Pa avant de réaliser les mesures). Les résultats des mesures de torsion sont rassemblés ci-après :

| Température °C | Module de torsion MPA |
|---|---|
| 0 | 850 |
| 100 | 720 |
| 150 | 630 |
| 155 | 400 |
| 160 | 270 |

On constate que les éprouvettes conservent remarquablement leur valeur de module en fonction de la température et, ce, au moins jusqu'à 150°C environ.

3. Essais comparatifs :

3.1. ESSAI A : examen du comportement d'un copolyamide amorphe conforme aux indications du brevet français FR-A-2.325.673 :

On a reproduit les mêmes opérations que celles décrites ci-avant aux paragraphes 1 et 2, mais en utilisant cette fois les nouvelles charges suivantes :

. dans le réacteur tricol :
- 47,11 g (0,4061 mole) de méthyl-2 pentaméthylènediamine-1,5,
- 83,67 g de triéthylamine, et
- 116,6 g de diméthyl-1,3 imidazolidone-2 (séchée sur tamis) ;

. dans l'ampoule de coulée :
- 65,96 g (0,3249 mole) de chlorure de téréphtaloyle (recristallisé),
- 16,49 g (0,0812 mole) de chlorure d'isophtaloyle (20 % en mole dans le mélange de chlorures), et
- 450 g de diméthyl-1,3 imidazolidone-2 (séchée sur tamis).

Le rendement de cette synthèse est de 92 %.

Le copolyamide obtenu est bien amorphe, mais il possède une Tg, déterminée comme indiqué au paragraphe 2, beaucoup plus faible qui est égale à 142°C.

| | | |
|---|---|---|
| Viscosité inhérente du copolyamide | : | 0,9 dl/g. |
| Masse moléculaire moyenne en poids | : | 71700 g. |

3.2. ESSAI B : examen du comportement d'un copolyamide de l'invention dans la préparation duquel on a remplacé le diamino-4,4′ tétraéthyl-3,3′,5,5′ diphénylméthane par la même quantité d'une autre diamine encombrée consistant dans l'isophoronediamine :

On opère comme il est indiqué au paragraphe 1 précédent, mais en partant des réactifs et charges suivants et en effectuant quelques variantes opératoires :

. dans le réacteur tricol :
- 10,59 g (0,0913 mole) de méthyl-2 pentaméthylènediamine-1,5,
- 20,94 g de triéthylamine,
- 1,72 g (0,0102 mole) d'isophoronediamine, et
- 21 g de diméthyl-1,3 imidazolidone-2 (séchée sur tamis) ;

. dans l'ampoule de coulée :
- 20,60 g (0,1015 mole) de chlorure de téréphtaloyle (recristallisé), et
- 112,5 g diméthyl-1,3 imidazolidone-2 (séchée sur tamis).

Le contenu de l'ampoule est coulé dans le réacteur en 2 heures 15 minutes. Après précipitation du polymère dans 2 litres d'eau, son lavage est effectué avec deux fois 2 litres d'eau.

Le rendement de cette synthèse est de 89 %.

Le copolyamide obtenu est semi-cristallin : il possède une basse Tg égale à 140°C ; son point de fusion (Tf), déterminé comme la Tg par analyse thermique différentielle, est trouvé égal à 260°C.

EXEMPLES 2 ET 3 ET ESSAI COMPARATIF C :

Copolyamides conformes à l'exemple 1 précédent dans lesquels la quantité des unités (III), dérivant du diamino-4,4′ tétraéthyl-3,3′,5,5′ diphénylméthane, dans le mélange des diamines est modifiée comme suivant :

| | | |
|---|---|---|
| - exemple 2 | : | 20 % en mole ; |
| - exemple 3 | : | 30 % en mole ; |
| - essai C | : | 5 % en mole. |

On a reproduit les mêmes opérations que celles décrites ci-avant à l'exemple 1, mais en utilisant cette fois un réacteur en verre de 250 $cm^3$, les nouvelles charges suivantes et un autre solvant (la N-méthylpyrrolidone-2 à la place de la diméthyl-1,3 imidazolidone-2) également séché au préalable sur tamis moléculaire :

. dans le réacteur en verre :

| Réactifs/Solvant | | Exemple 2 | Exemple 3 | Essai C |
|---|---|---|---|---|
| - méthylpentaméthylènediamine | : | 4,76 g (0,0410 mole) | 4,06 g (0,0350 mole) | 5,51 g (0,0475 mole) |
| - triéthylamine | : | 10 g | 10,34 g | 10,11 g |
| - diamine aromatique encombrée | : | 3,10 g (0,0100 mole) | 4,65 g (0,0150 mole) | 0,775 g (0,0025 mole) |
| - N-méthylpyrrolidone-2 | : | 38,47 g | 41 g | 43,60 g |

. dans l'ampoule de coulée :

| Réactif/Solvant | | Exemple 2 | Exemple 3 | Essai C |
|---|---|---|---|---|
| - chlorure de téréphtaloyle | : | 10,35 g (0,0510 mole) | 10,15 g (0,0500 mole) | 10,15 g (0,0500 mole) |
| - N-méthylpyrrolidone-2 | : | 38,47 g | 41 g | 43,60 g |

Dans ces exemples et essai, le contenu de l'ampoule de coulée est versé en 45 minutes. Après précipitation du polymère dans 1,5 litre d'eau, son lavage est effectué avec 3 fois 1 litre d'eau.
le tableau qui suit rassemble les principaux résultats de ces exemples et essai :

| Exemple/Essai | Rendement de la synthèse | Nature du copolyamide | Tg | Tf | $\overline{Mw}$ |
|---|---|---|---|---|---|
| 2 | 85 % | amorphe | 162°C | - | 45000 |
| 3 | 80 % | amorphe | 165°C | - | 30000 |
| C | 93 % | semi-cristallin | 144°C | 268°C | 30000 |

EXEMPLE 4

Copolyamide conforme à l'invention dans lequel les unités (III) dérivent du diamino-4,4' tétraisopropyl-3,3',5,5' diphénylméthane, la quantité de ces unités dans le mélange des diamines étant de 10 % en mole.

On a reproduit les mêmes opérations que celles décrites dans l'exemple 1 précédent, mais en utilisant cette fois un réacteur en verre de 250 cm³ et les nouvelles charges suivantes :

. dans le réacteur en verre :

- 5,22 g (0,0450 mole) de méthyl-2 pentaméthylènediamine,
- 10,10 g de triéthylamine,
- 1,83 g (0,0050 mole) de diamino-4,4' tétraisopropyl-3,3',5,5' diphénylméthane, et
- 30 g de diméthyl-1,3 imidazolidone-2 (séchée sur tamis) ;

. dans l'ampoule de coulée :

- 10,15 g (0,0500 mole) de chlorure de téréphtaloyle (recristallisé), et
- 40 g de diméthyl-1,3 imidazolidone-2 (séchée sur tamis).

Le contenu de l'ampoule de coulée est versé en 60 minutes. Après précipitation du polymère dans 1 litre d'eau, son lavage est effectué avec 3 fois 1 litre d'eau.

Le rendement de cette synthèse est de 85 %.

Le copolyamide obtenu est amorphe et il possède une Tg égale à 148°C. Sa masse moléculaire moyenne en poids est égale à 53000 g.

EXEMPLE 5 ET ESSAI COMPARATIF D

Copolyamides dans lesquels les unités (III) dérivent du diamino-4,4' diéthyl-3,3' diméthyl-5,5' diphénylméthane, la quantité de ces unités dans le mélange des diamines s'établissant de la manière suivante :

- exemple 5 : 15 % en mole ;
- essai D : 10 % en mole.

On a reproduit les mêmes opérations que celle décrites ci-avant à l'exemple 1, mais en utilisant cette fois un réacteur en verre de 250 cm³ et les nouvelles charges suivantes :

. dans le réacteur en verre :

| Réactifs/Solvant | | Exemple 5 | Essai D |
|---|---|---|---|
| - méthylpenta méthylènediamine | : | 10,01 g (0,0863 mole) | 10,59 g (0,0913 mole) |
| - triéthylamine | : | 20,94 g | 20,94 g |
| - diamine aromatique encombrée avec groupes méthyle et éthyle | : | 4,29 g (0,0152 mole) | 2,88 g (0,0102 mole) |
| - diméthylimid azolidone | : | 29 g | 29 g |

. dans l'ampoule de coulée :

| Réactif/Solvant | | Exemple 5 | Essai D |
|---|---|---|---|
| - chlorure de téréphtaloyle | : | 20,60 g (0,1015 mole) | 20,60 g (0,1015 mole) |
| - diméthyl imidazolidone | : | 112,50 g | 112,50 g |

Le contenu de l'ampoule de coulée est versé en 2 heures 30 minutes. Après précipitation du polymère dans 2 litres d'eau, son lavage est effectué avec deux fois + litres d'eau.

Le tableau qui suit rassemble les principaux résultats de ces exemple et essai.

| Exemple/Essai | Rendement de la synthèse | Nature du copolyamide | Tg | Tf | $\overline{Mw}$ |
|---|---|---|---|---|---|
| 5 | 94,7 % | amorphe | 156°C | - | 42000 |
| D | 90 % | semi-cristallin | 156°C | 260°C | 35000 |

**Revendications**

1/ Copolyamides amorphes et transparents présentant notamment une température de transition vitreuse Tg supérieure à 142°C qui sont réalisés à partir de réactifs comprenant de l'acide téréphtalique ou un dérivé et de la méthyl-2 pentaméthylènediamine-1,5, ces copolyamides étant caractérisés par les points suivants :. ils contiennent dans leur structure les unités de récurrence de formules (I), (II), éventuellement (II'), et (III) :

(I) désignant la structure:

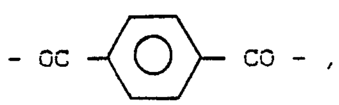

(II) désignant la structure :

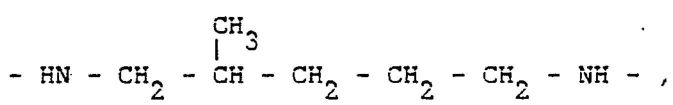

(II') désignant la structure :

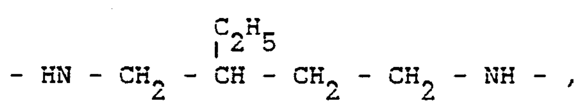

(III) désignant la structure :

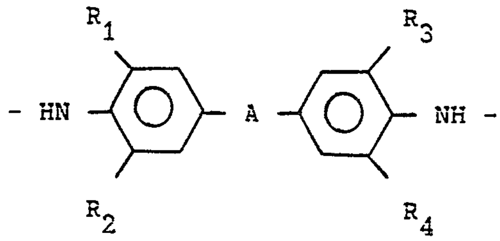

dans laquelle :
- les symboles $R_1$, $R_2$, $R_3$ et $R_4$, identiques ou différents, représentent chacun un radical méthyle, éthyle, propyle ou isopropyle, et obéissent aux conditions suivantes : soit $R_1 = R_2 = R_3 = R_4$, soit $R_1 = R_2$ avec $R_3 = R_4$, soit $R_1 = R_3$ avec $R_2 = R_4$ ou soit $R_1 = R_4$ avec $R_2 = R_3$,
- le symbole A représente un groupement :

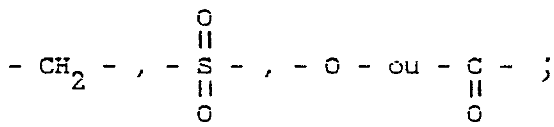

. le rapport molaire des unités (I) par rapport à la somme des unités (II) + (II′) + (III) est égal à 1 ;
. la quantité des unités (II′) dans le mélange (II) + (II′) se situe dans l'intervalle allant de 0 a 5 % en mole et celle des unités (II), par rapport à la même référence, se situe dans l'intervalle allant de 100 à 95 % en mole ;
. la quantité des unités (III) dans le mélange (II) + (II′) + (III) obéit aux conditions complémentaires suivantes :
- elle se situe dans l'intervalle allant de 8 à 50 % en mole lorsque les quatre symboles $R_1$, $R_2$, $R_3$ et $R_4$ représentent chacun un radical ayant plus d'un atome de carbone,
- elle se situe dans l'intervalle allant de 13 à 50 % en mole lorsque seulement deux des quatre symboles $R_1$, $R_2$, $R_3$ et $R_4$ représentent chacun un radical ayant plus d'un atome de carbone (les deux autres symboles représentant alors chacun un radical méthyle), ou
- elle se situe dans l'intervalle allant de 18 à 50 % en mole lorsque les quatre symboles $R_1$, $R_2$, $R_3$ et $R_4$ représentent chacun un radical méthyle.

2/ Copolyamides selon la revendication 1, caractérisés en ce qu'ils présentent une structure dans laquelle :
. les unités (III) possèdent la structure précédemment mentionnée avec $A = -CH_2-$, et
. la quantité des unités (III) dans le mélange (II) + (II′) + (III) obéit aux conditions complémentaires suivantes :
- elle se situe dans l'intervalle allant de 10 à 40 % en mole lorsque les quatre symboles $R_1$, $R_2$, $R_3$ et $R_4$ représentent chacun un radical ayant plus d'un atome de carbone,
- elle se situe dans l'intervalle allant de 15 à 40 % en mole lorsque seulement deux des quatre symboles $R_1$, $R_2$, $R_3$ et $R_4$ représentent chacun un radical ayant plus d'un atome de carbone, ou
- elle se situe dans l'intervalle allant de 20 à 40 % en mole lorsque les quatre symboles $R_1$, $R_2$, $R_3$ et $R_4$ représentent chacun un radical méthyle.

3/ Copolyamides selon la revendication 2, caractérisés en ce qu'ils présentent une structure dans laquelle les unités de formule (III) proviennent des diamines encombrées suivantes : le diamino-4,4′ diéthyl-3,3′ diméthyl-5,5′ diphénylméthane, le diamino-4,4′ tétraéthyl-3,3′,5,5′ diphénylméthane et le diamino-4,4′ tétraisopropyl-3,3′,5,5′ diphénylméthane.

4/ Mélanges ou alliages des copolyamides selon l'une quelconque des revendications 1 à 3 avec d'autres polyamides consistant dans le nylon 12, le nylon 11, le nylon 6.9, le nylon 6.10, le nylon 6.6, le nylon 6 ou dans les copolyamides obtenus à partir des monomères conduisant aux homopolyamides de type nylon indiqués ci-avant.

5/ Articles conformés tels que objets moulés, corps creux, fils et films issus des copolyamides selon l'une quelconque des revendications 1 à 3 ou de leurs mélanges ou alliages selon la revendication 4.

**Revendications pour l'Etat contractant suivant: ES**

1/ Procédé de préparation de copolyamides amorphes et transparents présentant notamment une température de transition vitreuse Tg supérieure à 142°C qui sont réalisés à partir de réactifs comprenant de l'acide téréphtalique ou un dérivé et de la méthyl-2 pentaméthylènediamine-1,5, caractérisé par le fait que l'on fait réagir :
* l'acide téréphtalique ou un dérivé, avec
* la méthyl-2 pentaméthylènediamine-1,5, prise seule ou en mélange avec l'éthyl-2 tétraméthylènediamine-1,4, et avec
* une diamine aromatique encombrée de formule générale :

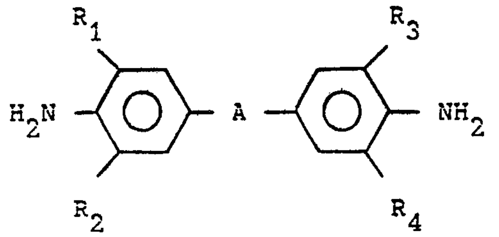

(IV)

dans laquelle :
- les symboles $R_1$, $R_2$, $R_3$ et $R_4$, identiques ou différents, représentent chacun un radical méthyle, éthyle, propyle ou isopropyle, et obéissent aux conditions suivantes : soit $R_1 = R_2 = R_3 = R_4$, soit $R_1 = R_2$ avec $R_3 = R_4$, soit $R_1 = R_3$ avec $R_2 = R_4$ ou soit $R_1 = R_4$ avec $R_2 = R_3$,
- le symbole A représente un groupement :

$$-CH_2- \ , \ -\overset{\overset{O}{\|}}{\underset{\underset{O}{\|}}{S}}- \ , \ -O- \ \text{ou} \ -\underset{\underset{O}{\|}}{C}-;$$

* les réactifs étant utilisés dans des proportions telles que :
. le rapport molaire acide téréphtalique ou son dérivé/diamine est égal à 1,
. la quantité d'éthyl-2 tétraméthylènediamine-1,4 dans le mélange éthyl-2 tétraméthylènediamine-1,4 + méthyl-2 pentaméthylènediamine-1,5 se situe dans l'intervalle allant de 0 à 5 % en mole,
. la quantité de diamine aromatique encombrée de formule (IV) dans le mélange des diamines obéit aux conditions suivantes ;
- elle se situe dans l'intervalle allant de 8 à 50 % en mole lorsque les quatre symboles $R_1$, $R_2$, $R_3$ et $R_4$ représentent chacun un radical ayant plus d'un atome de carbone,
- elle se situe dans l'intervalle allant de 13 à 50 % en mole lorsque seulement deux des quatre symboles $R_1$, $R_2$, $R_3$ et $R_4$ représentent chacun un radical ayant plus d'un atome de carbone (les deux autres symboles représentant alors chacun un radical méthyle), ou
- elle se situe dans l'intervalle allant de 18 à 50 % en mole lorsque les quatre symboles $R_1$, $R_2$, $R_3$ et $R_4$ représentent chacun un radical méthyle.

2/ Procédé selon la revendication 1, caractérisé en ce qu'il consiste en la technique de polycondensation en solution selon laquelle on fait réagir le dihalogénure de l'acide téréphtalique avec le mélange des diamines en opérant dans un solvant exempt de traces d'eau.

3/ Procédé selon l'une quelconque des revendications 1 ou 2, caractérisé par les points suivants :
. la diamine aromatique encombrée de formule (IV) possède une structure dans laquelle $A = -CH_2-$,
. la quantité de diamine aromatique encombrée dans le mélange des diamines obéit aux conditions complémentaires suivantes :
- elle se situe dans l'intervalle allant de 10 à 40 % en mole lorsque les quatre symboles $R_1$, $R_2$, $R_3$ et $R_4$ représentent chacun un radical ayant plus d'un atome de carbone,
- elle se situe dans l'intervalle allant de 15 à 40 % en mole lorsque seulement deux des quatre symboles $R_1$, $R_2$, $R_3$ et $R_4$ représentent chacun un radical ayant plus d'un atome de carbone, ou
- elle se situe dans l'intervalle allant de 20 à 40 % en mole lorsque les quatre symboles $R_1$, $R_2$, $R_3$ et $R_4$ représentent chacun un radical méthyle.

4/ Procédé selon la revendication 3, caractérisé en ce que la diamine aromatique encombrée de formule (IV) est choisie dans le groupe formé par : le diamino-4,4′ diéthyl-3,3′ diméthyl-5,5′ diphénylméthane, le diamino-4,4′ tétraéthyl-3,3′,5,5′ diphénylméthane et le diamino-4,4′ tétraisopropyl-3,3′,5,5′ diphénylméthane.

5/ Application des copolyamides préparés selon l'une quelconque des revendications 1 à 4 à la réalisation de mélanges ou alliages avec d'autres polyamides consistant dans le nylon 12, le nylon 11, le nylon 6.9, le nylon 6.10, le nylon 6.6, le nylon 6 ou dans les copolyamides obtenus à partir des monomères conduisant aux homopolyamides de type nylon indiqués ci-avant.

6/ Application des copolyamides préparés selon l'une quelconque des revendications 1 à 4 à la réalisation d'articles conformés tels que objets moulés, corps creux, fils et films.

7/ Application des mélanges ou alliages selon la revendication 5 à la réalisation d'articles conformés tels que objets moulés, corps creux, fils et films.

Office européen des brevets

# RAPPORT DE RECHERCHE EUROPEENNE

Numero de la demande

EP 89 42 0212

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 355 043 (DYNAMIT NOBEL AG)<br>* Revendications 1,2 * | 1-5 | C 08 G 69/26<br>C 08 L 77/06<br>C 08 J 5/00 |
| A | CHEMICAL ABSTRACTS, vol. 71, 15 décembre 1969, page 75, no. 114079d, Columbus, Ohio, US; & JP-A-69 19 551 (C. TOYO RAYON CO.,LTD) 23-08-1969<br>* Résumé * | 1-5 | |
| A,D | US-A-3 382 216 (BLASCHKE et al)<br>* Revendications 1,2; colonne 1, lignes 43-48 * | 1-5 | |
| A | US-A-3 941 755 (CHAPMAN et al.)<br>* Revendications 1-4 * | 1-5 | |

DOMAINES TECHNIQUES RECHERCHES (Int. Cl.4)

C 08 G

Le présent rapport a été établi pour toutes les revendications

| Lieu de la recherche | Date d'achèvement de la recherche | Examinateur |
|---|---|---|
| LA HAYE | 18-08-1989 | GLANDDIER A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant